# EUROPÄISCHE PATENTSCHRIFT

(11) **EP 1 169 235 B1**
(45) Veröffentlichungstag und Bekanntmachung des Hinweises auf die Patenterteilung: **16.04.2003**
(21) Anmeldenummer: 01911374.5
(22) Anmeldetag: 22.01.2001
(51) Int. Cl.: B65D 41/32, B65D 45/34, F16B 2/18, E05C 19/14

(54) **VERSCHLUSS-SPANNER**
TOGGLE-CLAMP FOR FASTENER
TENDEUR A MOYENS DE SERRAGE

(30) Priorität: 12.02.2000 DE 10006354
(43) Veröffentlichungstag der Anmeldung: 09.01.2002
(73) Patentinhaber: DE-STA-CO Metallerzeugnisse GmbH, D-61449 Steinbach/Ts. (DE)
(72) Erfinder: FUCHS, Rainer, 60598 Frankfurt am Main (DE)
(74) Vertreter: Wolf, Günter, Dipl.-Ing.
(86) Internationale Anmeldenummer: DE0100250
(87) Internationale Veröffentlichungsnummer: WO01058773

(56) Entgegenhaltungen:
- DE-U- 9 016 964
- US-A- 5 667 261

## Beschreibung

### 1. Feld der Erfindung

Die Erfindung betrifft einen Verschluss-Spanner, bestehend aus einem mit einem Lager versehenen Trägerelement und einem zu diesem schwenkbaren Spannhebel, dessen eines Ende mit dem Lager verbunden ist und dessen anderes Ende einen Handgriff aufweist, wobei am Spannhebel zwischen dem Lager und dem Handgriff ein schwenkbar gelagertes Spannelement angeordnet ist, das.ein auf der handgrifffernen Seite des Lagers angeordnetes Verrastungselement lösbar mit dem Trägerelement verbindet.

### 2. Beschreibung des Standes der Technik

Ein derartiger Verschluss-Spanner ist nach der DE 90 16 964 U1 bekannt. Verschluss-Spanner dieser Art dienen in Verbindung mit ihrem Verrastungselement, in den das Spannelement einzuhängen ist, als Spanner für beliebige fest oder dicht zusammenzuspannende Teile, wobei das Verrastungselement am einen und das Trägerelement mit Spannhebel und Spannelement fluchtend dazu am anderen Teil fest angeordnet ist. In Öffnungsstellung des Spannhebels wird das schwenkbar an diesem gelagerte Spannelement über das Verrastungselement gelegt, das sich dann bei Rückstellung des Spannhebels in Spannstellung am entsprechend ausgebildeten Verrastungselement anlegt und dieses fest zieht. Der Spannhebel wird dabei bis zur Totpunktstellung bzw. geringfügig über Totpunktstellung nach unten gedrückt, welche Stellung der Spannendstellung entspricht.

Diese Verschluss-Spanner erfüllen ihren Zweck an sich zufriedenstellend. Allerdings sind zum sicheren Öffnen eines solchen Verschlusses bisher stets zwei Hände erforderlich, nämlich eine zur Betätigung des Spannhebels und eine zum Zurücklegen des Spannelements auf den Spannhebel (Öffnungsstellung). Die Benutzung nur einer Hand führt dazu, daß das Spannelement in Öffnungsstellung im Bereich des Verrastungselements liegen bleibt und somit beispielsweise beim Entfernen des Teils, an dem das Verrastungselement befestigt ist, die Gefahr besteht, daß es zu einem ungewollten Verhaken von Verrastungselement und Spannelement kommt. Es muß also Sorge dafür getragen werden, daß das Spannelement aus dem Bereich des Verrastungselements entfernt wird. Mit dem Verschluss-Spanner nach der DE 90 16 964 U1 ist somit ein schnelles und möglichst auch gleichzeitiges Öffnen mehrerer solcher Spanner durch den Zwang zur Benutzung beider Hände für einen Spanner erschwert. Dies ist insofern um so nachteiliger, als im Prinzip bei den meisten Anwendungsfällen eine Vielzahl solcher Verschluss-Spanner zu betätigen sind.

### Gegenstände und Zusammenfassung der Erfindung

Der Erfindung liegt also die Aufgabe zugrunde, den Verschluss-Spanner der eingangs genannten Art dahingehend zu verbessern, und zwar auf möglichst einfache Weise, daß dieser ohne weiteres mit einer Hand in verhakungsfreie Öffnungsstellung bringbar ist.

Diese Aufgabe ist mit einem Verschluss-Spanner der eingangs genannten Art dadurch gelöst, daß zum Schwenken des Spannelements dieses handgriffseitig mit einem handbetätigbaren Hebel versehen ist.

Von der Spannendstellung ausgehend funktioniert der erfindungsgemäße Verschluss-Spanner wie folgt: Zunächst wird der Spannhebel mit einer Hand umfaßt und angehoben, wodurch sich das Spannelement vom Verrastungselement löst, aber bei entsprechender Anordnung unter Schwerkraftwirkung auf diesem liegen bleibt. Im nächsten Schritt wird mit Hilfe des erfindungsgemäßen Hebels das Spannelement soweit zurück geschwenkt, daß es auf dem Spannhebel liegen bleibt, wobei entscheidend ist, daß es erst der handgriffseitige Hebel (der in der Regel mit dem Daumen bedient wird) ermöglicht, den gesamten Öffnungsvorgang mit nur einer Hand durchzuführen. Die Zuhilfenahme einer zweiten Hand kann entfallen, d.h., diese kann bspw. gleichzeitig eine andere Spannvorrichtung öffnen.

Nachdem das Spannelement mit dem erfindungsgemäßen Hebel aus dem Bereich des Verhakungselements herausgeschwenkt worden ist, bedarf es im Prinzip keiner weiteren Handgriffe. Es hat sich aber insbesondere bei vibrierenden Untergründen als günstig erwiesen, den Spannhebel einschließlich des Spannelements vollständig zurück zu klappen, d.h., in die Position zu bringen, die der Spannendstellung entspricht, allerdings mit dem Unterschied, daß nunmehr das Spannelement gewissermaßen auf dem Spannhebel sicher abgelegt ist und sich nicht mehr von allein in den Bereich des Verrastungselements bewegen kann. - Die beiden ursprünglich miteinander verspannten Teile können in diesem Zustand problemlos voneinander gelöst werden.

Vorteilhafte Weiterbildungen ergeben sich aus den Unteransprüchen.

Der erfindungsgemäße Verschluss-Spanner und seine vorteilhaften Weiterbildungen gemäß der abhängigen Ansprüche 2 bis 5 werden nachfolgend anhand einer zeichnerischen Darstellung von zwei Ausführungsbeispielen näher erläutert.

Es zeigt
- Fig. 1: perspektivisch eine bevorzugte Ausführungsform des Verschluss-Spanners;
- Fig. 2: in Seitenansicht eine andere Ausführungsform eines geschlossenen Verschluss-Spanners und
- Fig. 3: den Verschluss-Spanner nach Fig. 2 in Öffnungsstellung.

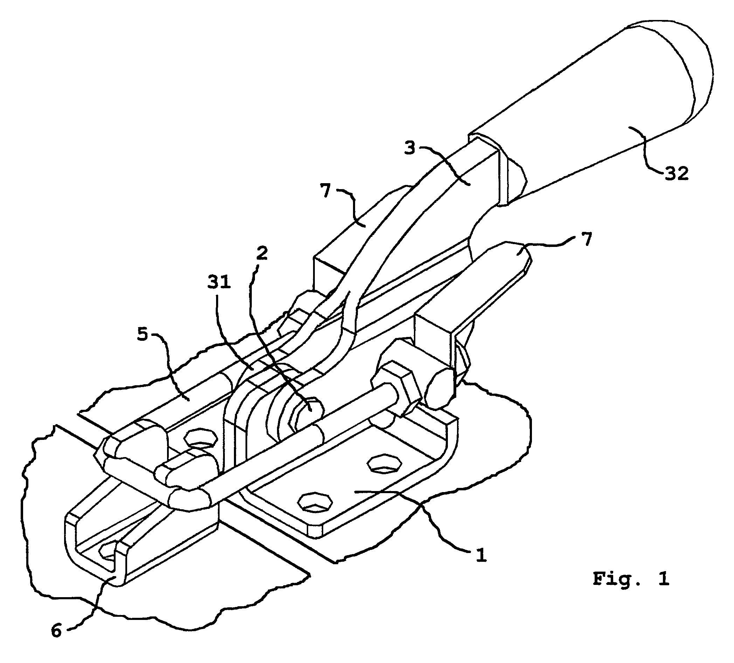

Der in Fig. 1 dargestellte Verschluss-Spanner besteht aus einem mit einem Lager 2 versehenen, aus Blech gebildeten Trägerelement 1 und einem zu diesem schwenkbaren Spannhebel 3, dessen eines Ende 31 mit dem Lager 2 verbunden ist und dessen anderes Ende einen aus Kunststoff bestehenden Handgriff 32 aufweist. Dabei ist am Spannhebel 3 zwischen dem Lager 2 und dem Handgriff 32 ein schwenkbar gelagertes Spannelement 5 angeordnet, das ein auf der handgrifffernen Seite des Lagers 2 angeordnetes Verrastungselement 6 lösbar mit dem Trägerelement 1 verbindet, wobei die beiden zu verbindenden Teile nur angedeutet dargestellt sind.

Für diesen Verschluss-Spanner ist nun wesentlich, daß zum Schwenken des Spannelements 5 dieses handgriffseitig mit einem handbetätigbaren Hebel 7 versehen ist.

Dieser Hebel 7 ermöglicht ein vom Spannhebel 3 unabhängiges Schwenken des Spannelements 5. Der Hebel 7 ist dabei stets so angeordnet, daß er trotz Umschließung des Handgriffs mit der einen Hand ohne weiteres beispielsweise mit dem Daumen derselben Hand betätigt werden kann.

Gemäß Fig. 1 ist dabei vorteilhaft vorgesehen, daß das Spannelement 5 nicht als einarmiger, sondern als u-förmiger Spannbügel ausgebildet ist, dessen beide freien Enden schwenkbar am Spannhebel 3 gelagert sind. Hierdurch ergibt sich eine gleichmäßige Kraftverteilung beim Spannen und die Möglichkeit - wie dargestellt-, an beiden Enden des u-förmigen Spannelements jeweils ein Hebel 7 anordnen zu können, was die Spannvorrichtung dann ohne weiteres sowohl für Rechts- als auch für Linkshänder benutzbar macht. Darüber hinaus kann durch diese Weiterbildung beispielsweise ein Verschluss-Spanner mit der rechten und ein weiterer Verschluss-Spanner gleichzeitig mit der linken Hand bedient werden.

Hinsichtlich einer ergonomisch günstigen Bedienbarkeit des Verschluss-Spanners ist - wie Fig. 1 dargestellt - schließlich vorteilhaft vorgesehen, daß der Hebel 7 abgeflacht und etwa daumenbreit ausgebildet ist. Der Hebel 7 hat damit die Form einer flachen Lasche, was für die Betätigung mit dem Daumen günstig ist.

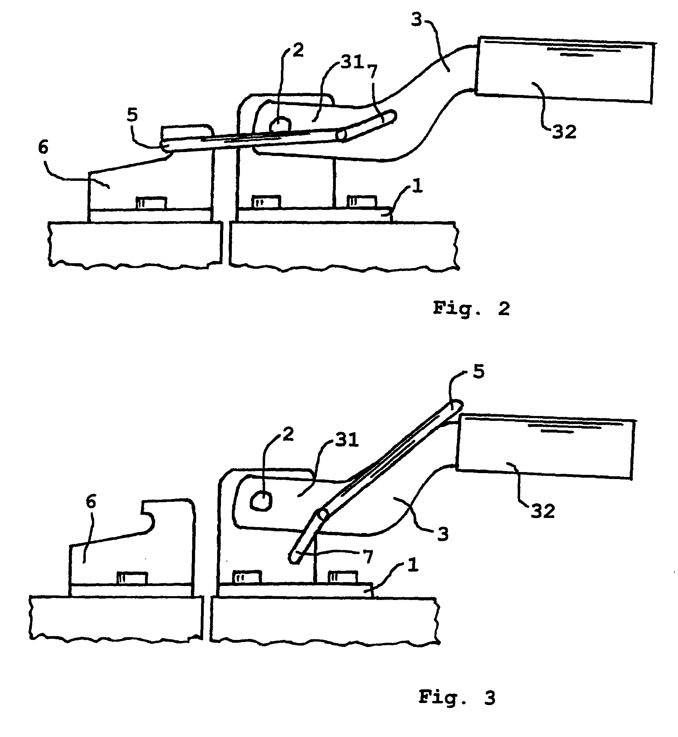

Gemäß der Ausführungsform nach Fig. 2 und 3 ist alternativ vorgesehen, das Spannelement 5 als zweiarmigen Hebel auszubilden, wobei der eine Arm den handbetätigbaren Hebel 7 bildet, d.h. dieser Bestandteil des Spannelements 5 ist.

## Patentansprüche

1. Verschluss-Spanner, bestehend aus einem mit einem Lager (2) versehenen Trägerelement (1) und einem zu diesem schwenkbaren Spannhebel (3), dessen eines Ende (31) mit dem Lager (2) verbunden ist und dessen anderes Ende einen Handgriff (32) aufweist, wobei am Spannhebel (3) zwischen dem Lager (2) und dem Handgriff (32) ein schwenkbar gelagertes Spannelement (5) angeordnet ist, das ein auf der handgrifffernen Seite des Lagers (2) angeordnetes Verrastungselement (6) lösbar mit dem Trägerelement (1) verbindet,
**dadurch gekennzeichnet,**
**daß** zum Schwenken des Spannelements (5) dieses handgriffseitig mit einem handbetätigbaren Hebel (7) versehen ist.

2. Verschluss-Spanner nach Anspruch 1,
**dadurch gekennzeichnet,**
**daß** das Spannelement (5) als zweiarmiger Hebel ausgebildet ist, wobei der eine Arm den handbetätigbaren Hebel (7) bildet.

3. Verschluss-Spanner nach Anspruch 1,
**dadurch gekennzeichnet,**
**daß** das Spannelement (5) als u-förmiger Spannbügel ausgebildet ist, dessen beiden freie Enden schwenkbar am Spannhebel gelagert sind.

4. Verschluss-Spanner nach Anspruch 3,
**dadurch gekennzeichnet,**
**daß** an beiden Enden des u-förmigen Spannelements jeweils ein Hebel (7) angeordnet ist.

5. Verschluss-Spanner nach einem der Ansprüche 1 bis 4,
**dadurch gekennzeichnet,**
**daß** der Hebel (7) abgeflacht und etwa daumenbreit ausgebildet ist.

## Claims

1. A closure clamp, comprising a carrier element (1) provided with a bearing (2), and a clamping lever (3) pivotable relative thereto, with one end (31) of the said lever being connected to the bearing (2) and the other of said ends being provided with a handle (32), wherein a pivotally arranged clamping element (5) is provided on the clamping lever (3) between the bearing (2) and the handle (32) to detachably connect a locking element (6) located on the side of the bearing 2 facing away from the handle, to the carrier element (1),
**characterized in that**
for swivelling the clamping element (5), the same is provided with a hand-operated lever (7) on the side facing the handle.

2. The closure clamp according to claim 1,
**characterized in that**
the clamping element (5) is designed as a two-armed lever, with one of the said arms forming the hand-operated lever (7).

3. The closure clamp according to claim 1,
**characterized in that**
the clamping element (5) is designed as a U-shaped clamping bracket the two free ends of which are pivotally arranged on the clamping lever.

4. The closure clamp according to claim 3
**characterized in that**
one lever (7) each is arranged on both ends of the U-shaped clamping element.

5. The closure clamp according to any one of claims 1 to 4
**characterized in that**
the lever (7) is of a flattened configuration and is designed to be of a width approximately corresponding to the user's thumb.

## Revendications

1. Tendeur de fermeture consistant en un élément de support (1) pourvu d'un palier (2) et d'un levier de serrage (3) pivotant vers celui-ci dont l'une des extrémités (31) est reliée au palier (2) et dont l'autre extrémité présente une manette, un élément de serrage (5) positionné pivotant étant placé sur le levier de serrage (3) entre le palier (2) et la manette (32), élément de serrage qui relie un élément d'enclenchement (6), placé sur le côté du palier (2) qui est éloigné de la manette, de manière amovible à l'élément de support (1),
**caractérisé en ce**
**que**, pour le pivotement de l'élément de serrage (5), celui-ci est pourvu, du côté de la manette, d'un levier (7) pouvant être actionné manuellement.

2. Tendeur de fermeture selon la revendication 1,
**caractérisé en ce**
**que** l'élément de serrage (5) est configuré comme un levier à deux bras, l'un des bras formant le levier (7) pouvant être actionné manuellement.

3. Tendeur de fermeture selon la revendication 1,
**caractérisé en ce**
**que** l'élément de serrage (5) est configuré comme un étrier de tension en forme d'U dont les deux extrémités libres sont positionnées pivotantes sur le levier de serrage.

4. Tendeur de fermeture selon la revendication 3,
**caractérisé en ce**
**qu'**un levier (7) est placé respectivement à chacune des deux extrémités de l'élément de serrage en forme d'U.

5. Tendeur de fermeture selon l'une des revendications 1 à 4,
**caractérisé en ce**
**que** le levier (7) est configuré aplati et d'à peu près la largeur du pouce.
